# EUROPÄISCHE PATENTSCHRIFT

(11) **EP 1 147 440 B1**
(45) Veröffentlichungstag und Bekanntmachung des Hinweises auf die Patenterteilung: **04.09.2002**
(21) Anmeldenummer: 00904827.3
(22) Anmeldetag: 04.01.2000
(51) Int. Cl.: G02B 6/25

(54) **VORRICHTUNG ZUM TRENNEN VON MINDESTENS EINER LICHTLEITENDEN FASER**
DEVICE FOR SPLITTING AT LEAST ONE OPTICAL FIBER
DISPOSITIF POUR SECTIONNER AU MOINS UNE FIBRE OPTIQUE

(30) Priorität: 29.01.1999 DE 19903569
(43) Veröffentlichungstag der Anmeldung: 24.10.2001
(73) Patentinhaber: Siemens Dematic AG, 90475 Nürnberg (DE)
(72) Erfinder: KRAUSE, Dieter, D-82449 Uffing Am Staffelsee (DE); DURIAN, Oliver, D-82008 Unterhaching (DE)
(74) Vertreter: Zedlitz, Peter, Dipl.-Inf.
(86) Internationale Anmeldenummer: DE0000030
(87) Internationale Veröffentlichungsnummer: WO00045205

(56) Entgegenhaltungen:
- DE-A- 3 527 734
- US-A- 4 565 310
- US-A- 5 368 211
- PATENT ABSTRACTS OF JAPAN vol. 016, no. 024 (P-1301), 21. Januar 1992 (1992-01-21) & JP 03 238401 A (NIPPON TELEGR & TELEPH CORP ;OTHERS: 01), 24. Oktober 1991 (1991-10-24)
- PATENT ABSTRACTS OF JAPAN vol. 014, no. 078 (P-1006), 14. Februar 1990 (1990-02-14) & JP 01 293307 A (SUMITOMO ELECTRIC IND LTD;OTHERS: 01), 27. November 1989 (1989-11-27)

## Beschreibung

Die Erfindung bezieht sich auf eine Vorrichtung zum Trennen von mindestens einer lichtleitenden Faser gemäß dem Oberbegriff des Patentanspruchs 1.

Lichtleitende Fasern, wie sie beispielsweise in der optischen Nachrichtentechnik verwendet werden, benötigen eine sehr glatte senkrechte Stirnfläche, damit die Einkoppelverluste des Lichts möglichst gering gehalten werden. Zum Trennen von Fasern werden diese daher in eigens dafür geschaffenen Vorrichtungen zunächst gespannt, anschließend geritzt und gebrochen. Dieses Verfahren erlaubt ein schnelles Trennen der Fasern mit ausreichender Stirnflächenqualität.

Aus DE 37 35 855 A1 ist eine Vorichtung bekannt, in der mehrere parallel angeordnete und durch eine klebende Bandleitung zusammengehaltene Fasern gleichzeitig getrennt werden können. Faserbündel aus beispielsweise zwölf Fasern werden so gleichzeitig getrennt und damit zum Anschluß an optische Bauelemente, wie Empfänger oder Leuchtdioden, präpariert. Die Fasern werden dabei durch zwei Fixierelemente an zwei in axialer Faserrichtung verschobenen Positionen gehalten. In der Mitte der beiden Fixierelemente ist beispielsweise ein verschiebbares Ritzmesser als Trenneinrichtung angeordnet, welches die Fasern so ritzt, daß diese anschließend durch einen Druck von der entgegengesetzten Seite brechen und eine definierte Stirnfläche aufweisen.

Während nach dem Trennvorgang auf der Seite des ersten Fixierelementes die Fasern noch beispielsweise durch das vorhandene Faserbündel geordnet gehalten werden, fehlt den Faserenden am zweiten Fixierelement nach dem Trennvorgang die Fixierung, so daß diese Faserenden sich ungeordnet an den ehemaligen Spannstellen der Fixierelemente verteilen und nur schwer und umständlich entfernt werden können.

Es ist daher die Aufgabe der Erfindung, eine Vorrichtung anzugeben, mit der der Faserabfall nach dem Trennen einfacher entfernt werden kann.

Die Aufgabe wird erfindungsgemäß gelöst durch eine Vorrichtung der eingangs genannten Art mit den kennzeichnenden Merkmalen des Patentanspruchs 1.

Der Oberbegriff des Anspruchs 1 basiert auf der Vorrichtung zum Trennenlauf JP-A-3238401.

Durch die Anbringung einer Klebeeinrichtung außerhalb der Fixierelemente ist es möglich, den Faserabfall nach dem Trennen fixiert auf dieser Klebeeinrichtung zu halten und diesen Faserabfall anschließend bequem zu entfernen. Die Fasern werden von der Klebefläche nach dem Trennen gehalten und können nicht mehr ungeordnet durcheinanderfallen. Sie sind anschließend beispielsweise leicht von Hand von der Klebeeinrichtung zu entfernen und können zum Entsorgen in entsprechende Behälter abgelegt werden.

Die Klebeeinrichtung ist um eine Achse parallel zur Faserachse schwenkbar zwischen einer Trennposition und einer Einlegeposition gelagert . In der Trennposition steht dabei die Klebeeinrichtung in Verbindung mit der mindestens einen Faser, während in der Einlegeposition keine Klebeverbindung zwischen der Klebeeinrichtung und der Faser vorhanden ist. Dadurch lassen sich die Fasern einfach in die Vorrichtung einlegen.

Eine besonders einfache Bedienung der Vorrichtung ist gemäß Anspruch 2 dadurch zu erzielen, daß ein Betätigungsorgan, welches die Fixierelemente und die Trenneinrichtung nach dem 35 Einlegen der Faser bedient, zusätzlich die als Wippe ausgebildete Klebeeinrichtung in die Trennposition bewegt. Dadurch ist der Trennvorgang mit einem einfachen Handgriff auszuführen, was zu einer Zeitersparnis gegenüber einem umständlichen Hantieren an mehreren Funktionselementen führt.

In einer vorteilhaften Ausgestaltung gemäß der Ansprüche 3 und 4 sind ein erster bzw. ein zweiter Gewindestift vorgesehen, um die Trennposition der Wippe bzw. die Einlegeposition der Wippe einzustellen. Die Einstellung kann dabei beispielsweise so gewählt werden, daß das Ritzrad den Faserabfall nach dem Trennvorgang nicht mehr berührt.

Gemäß Anspruch 5 wird die Wippe durch eine Druckfeder nach dem Trennvorgang von der Trennposition wieder zurück in die Einlegeposition bewegt.

Die Klebeeinrichtung ist in vorteilhafter Weise gemäß Anspruch 6 so ausgestaltet, daß sie Klebestreifen umfaßt, von denen die abgetrennten Enden der Fasern leicht entfernbar sind.

Bei einem Nachlassen der Klebekraft ist gemäß Anspruch 7 in vorteilhafter Weise vorgesehen, daß die Klebestreifen auswechselbar auf der Wippe befestigt sind.

Die Vorrichtung eignet sich in besonderer Weise gemäß Anspruch 8 zum Trennen von mehreren parallel angeordneten Fasern, da der dann gegenüber einer einzelnen Faser anfallende Faserabfall leicht zu entsorgen ist.

Anhand der Figuren der Zeichnung wird die Erfindung in einem Ausführungsbeispiel näher erläutert.

Dabei zeigen
Figur 1 eine schematische Seitenansicht einer erfindungsgemäßen Vorrichtung in der Einlegeposition,
Figur 2 eine schematische Seitenansicht der erfindungsgemäßen Vorrichtung in der Trennposition,
Figur 3 einen schematischen Schnitt durch eine erfindungsgemäße Vorrichtung in Seitenansicht zur Erläuterung der Trennfunktion,
Figur 4 einen schematischen Schnitt in Seitenschnitt durch die Vorrichtung in der Trennposition und
Figur 5 einen Schnitt entlang der Schnittlinie VI-VI der Figur 4.

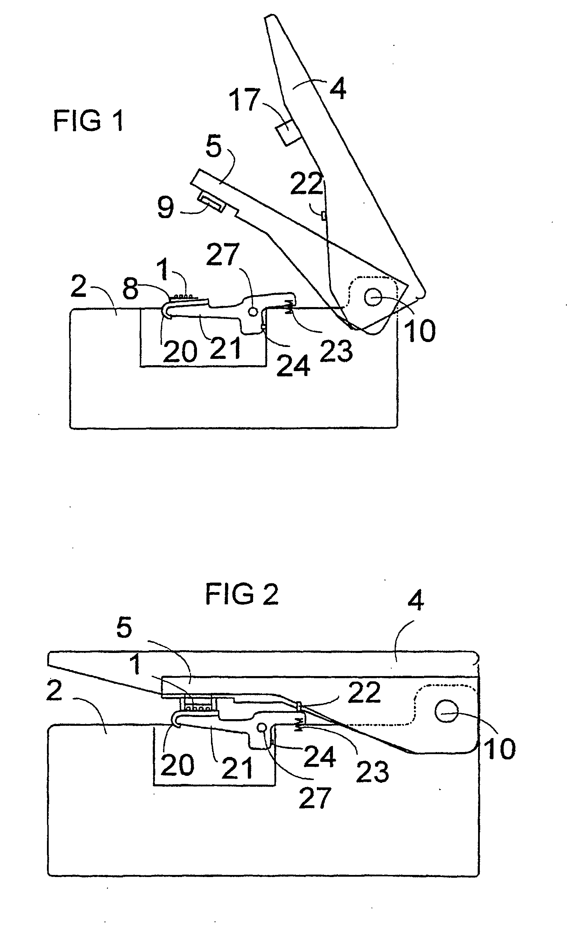

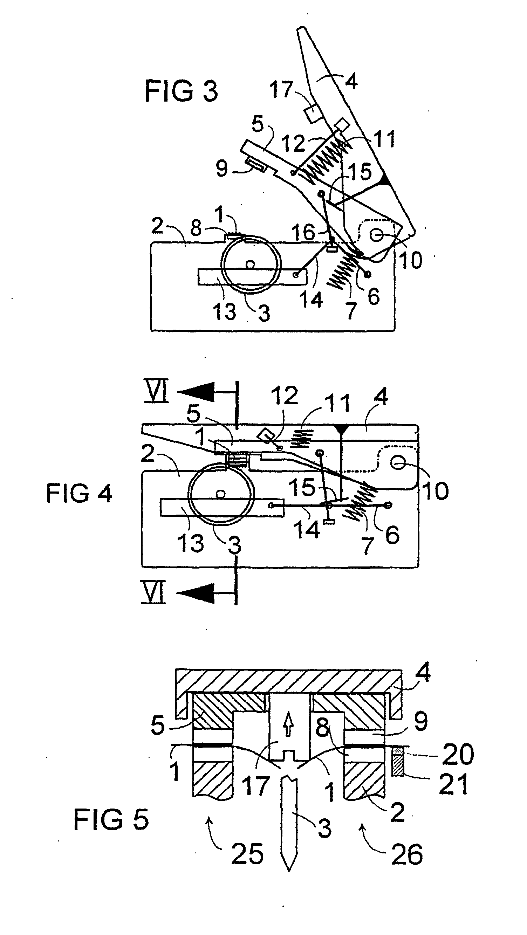

In Figur 1 ist eine Vorrichtung zum Trennen von mindestens einer lichtleitenden Faser 1 mit einem Grundkörper 2 dargestellt, die ein Betätigungsorgan 4 und einen Spannhebel 5 aufweist. Die einzelnen Fasern 1 bzw. die Faserbündel werden auf Klemmbacken 8 aufgelegt und werden während des späteren Trennvorgangs zwischen den Klemmbacken 8 und am Spannhebel 5 angeordneten Gegenklemmbacken 9 gehalten. Die Klemmbacken 8 und die Gegenklemmbacken 9 bilden dabei ein erstes Fixierelement 25 und ein zweites Fixierelement 26 entlang der axialen Richtung der Faser 1, wie es in Figur 5 im Schnitt dargestellt ist. Nach dem Fixieren wird durch das Betätigungsorgan 4 ein Ritzmesser 3 senkrecht zur Faserachse bewegt, wie es später anhand der Figuren 3 und 4 detaillierter dargestellt wird. Nach dem Ritzen wird ein Brechstempel 17 auf der dem Ritzmesser 3 entgegengesetzten Seite der Faser 1 eingesetzt, um die Faser 1 zu zerbrechen. Dabei entsteht eine definierte glatte Stirnfläche der Fasern 1, womit sichergestellt ist, daß es nur zu geringsten Koppelverlusten des Lichtes in bzw. aus der Faser kommt.

In Faserrichtung hinter dem zweiten Fixierelement 26 ist eine Klebeeinrichtung 20,21 angeordnet, die eine Wippe 21 und einen auf der Wippe befestigten Klebestreifen 20 umfaßt. Die Wippe 21 ist dabei um eine Bewegungsachse 27 parallel zur Faserachse beweglich. Die Bewegung ist dabei durch Anschläge in Form von Gewindestiften 22,24 und eine Druckfeder 23 eingeschränkt. In der in Figur 1 dargestellten Einlegeposition berührt der Klebestreifen 20 noch nicht die Fasern 1, damit sich die Fasern 1 bequem in die Vorrichtung einlegen lassen.

Erst wenn der Trennvorgang durch Niederdrücken des Betätigungsorgans 4 eingeleitete wird und damit das Betätigungsorgan 4 sowie der Spannhebel 5 um eine parallel zur Faserachse befindliche Achse 10 gedreht werden, wird durch einen am Betätigungsorgan 4 angeordneten ersten Gewindestift 22 die Wippe 21 in eine Position bewegt, in der der Klebestreifen 20 die Faserenden 1 berührt und somit die Faserenden fixiert sind. Dieser Zustand ist in Figur 2 dargestellt. Nach dem Trennvorgang wird das Betätigungsorgan 4 wieder zurückgeklappt, und eine an der Wippe 21 befestigte Druckfeder 23 bewegt die Wippe 21 wieder in die Einlegeposition. Die Einlegeposition ist dabei durch eine an der Wippe oder - nicht dargestellt - am Grundkörper 2 befindlichen zweiten Gewindestift 24 einstellbar. Durch die Verwendung des ersten Gewindestifts 22 und des zweiten Gewindestifts 24 läßt sich die Position der Wippe 21 so einstellen, daß sowohl das Einlegen erleichtert wird, als auch die nötige Klebekraft während des Trennvorgangs bewirkt ist. Zusätzlich läßt sich die Wippenposition so einstellen, daß das in Figur 3 und 4 dargestellte Ritzmesser 3 als Trennvorrichtung den Faserabfall beim Zurückfahren nicht berührt.

Der Klebestreifen 20 ist dabei so auszulegen, daß die Faserenden leicht von Hand wieder vom Klebestreifen 20 zu entfernen sind. Bei nachlassender Klebekraft des Klebestreifens 20 läßt sich der Klebestreifen 20 durch einen zwischen der Wippe 21 und dem Klebestreifen 20 vorhandenen geeignet gewählten Kleber leicht von der Wippe 21 entfernen und durch einen neuen Klebestreifen 20 ersetzen.

Nach Figur 3 weist die Trennvorrichtung ein Ritzmesser 3 auf, welches geradlinig verschiebbar gelagert ist. Außerdem sind am Grundkörper 2 das handhebelartige Bedienorgan 4, der Spannhebel 5 und ein kurbelartiger Hebel 6 gelagert. Eine Rückstellfeder 7 ist zwischen dem Grundkörper 2 und dem Spannhebel 5 eingespannt.

Der Spannhebel 5 und das Bedienorgan 4 sind um die gemeinsame Achse 10 am Grundkörper 2 schwenkbar gelagert. Eine zwischen ihnen vorgespannte Spannfeder 11 spreizt sie bis zum Anschlag an einem wechselseitigen Anschlagelement 12 auseinander. In der gezeigten Ausgangsstellung ist der Spannhebel 5 so weit geöffnet, daß die Fasern 1 bequem eingelegt werden können. Eine pleuelartige Stange 14 ist gelenkig mit dem kurbelartigen Hebel 6 und dem Schlitten 13 verbunden und bildet zusammen mit diesen einen Kurbeltrieb, der eine Drehbewegung des Hebels 6 in eine geradlinig horizontale Bewegung des Schlittens 13 mit dem Ritzmesser 3 umwandelt.

Am Bedienorgan 4 ist mit Abstand zum Hebel 6 ein Anschlag 15 befestigt, der auf das bewegliche Ende des Hebels 6 zielt. Ferner ist am Spannhebel 5 ein stangenartiges Rückholelement 16 schwenkbar gelagert, das mit seinem anderen Ende in der Nähe des zwischen der Stange 14 und dem Hebel 6 gebildeten Gelenks längsverschiebbar eingehängt ist. In der gezeigten Stellung sind die Stange 14 und der Hebel 6 zueinander annähernd senkrecht abgewinkelt, so daß das Ritzmesser 3 zu dieser Seite hin zurückgezogen ist.

Nach Figur 4 ist das Bedienorgan bis in seine Endstellung weitergeschwenkt. Dabei wurden der Hebel 6 und die Stange 14 durch den Anschlag 15 bis in eine gestreckte Stellung geschwenkt, wodurch der Schlitten 13 mit dem Ritzmesser 3 auf eine gegenüberliegende Seite der Fasern 1 verschoben wurde und die Fasern eingekerbt wurden. Ein am Bedienorgan 4 in der Höhe der Klemmbacken 8 befestigter Brechstempel 17 hat daraufhin, wie beispielsweise aus Figur 5 ersichtlich, die Fasern 1 bis zum Bruch durchgebogen. Beim Zurückschwenken des Bedienorgans 4 wird nun das Ritzmesser 3 wieder in seine ursprüngliche Position gezogen, und, wie bereits geschildert, lassen sich mit Hilfe der erfindungsgemäßen Vorrichtung die Faserabfälle einfach von der Klebeeinrichtung entfernen.

## Patentansprüche

1. Vorrichtung zum Trennen von mindestens einer lichtleitenden Faser (1) mit einem ersten (25) und einem zweiten (26) Fixierelement zum Fixieren der mindestens einen Faser (1) an zwei in axialer Richtung der Faser (1) voneinander getrennten Positionen,
mit einer Trenneinrichtung (3), die zwischen den beiden Fixierelementen (25,26) angeordnet ist,
und mit einer Klebeeinrichtung (20,21) zum lösbaren Aufkleben der mindestens einen Faser (1), die in axialer Faserrichtung auf der der Trenneinrichtung (3) gegenüberliegenden Seite eines der Fixierelemente (26) angeordnet ist,
**dadurch gekennzeichnet,**
**daß** die Klebeeinrichtung (20,21) insgesamt um eine Achse (27) parallel zur Faserachse schwenkbar zwischen einer Trennposition und einer Einlegeposition gelagert ist, wobei in der Trennposition die Klebeeinrichtung (20,21) in Klebeverbindung mit der mindestens einen Faser (1) steht.

2. Vorrichtung zum Trennen von mindestens einer lichtleitenden Faser (1) nach Anspruch 1,
**dadurch gekennzeichnet,**
**daß** die Klebeeinrichtung (20,21) eine Wippe (21) umfaßt,
**daß** ein Betätigungsorgan (4) zum Betätigen der Fixierelemente (25,26) und der Trenneinrichtung (3) für den Trennvorgang nach dem Einlegen der mindestens einen Faser (1) vorgesehen ist
und **daß** das Betätigungsorgan (4) und die Wippe (21) so ausgebildet sind, daß das Betätigungsorgan (4) beim Trennvorgang zusätzlich die Wippe (21) von der Einlegeposition in die Trennposition bewegt.

3. Vorrichtung zum Trennen von mindestens einer lichtieitenden Faser (1) nach Anspruch 2,
**dadurch gekennzeichnet,**
**daß** das Betätigungsorgan (4) einen ersten Gewindestift (22) zum Einstellen der Trennposition der Wippe (21) aufweist.

4. Vorrichtung zum Trennen von mindestens einer lichtleitenden Faser (1) nach einem der Ansprüche 2 oder 3,
**dadurch gekennzeichnet,**
**daß** ein zweiter Gewindestift (24) zum Einstellen der Einlegeposition der Wippe (21) vorgesehen ist.

5. Vorrichtung zum Trennen von mindestens einer lichtleitenden Faser (1) nach einem der Ansprüche 2, 3 oder 4,
**dadurch gekennzeichnet,**
**daß** eine Druckfeder (23) an der Wippe (21) derart angeordnet ist, daß die Wippe (21) nach dem Trennvorgang von der Trennposition in die Einlegeposition bewegt wird.

6. Vorrichtung zum Trennen von mindestens einer lichtleitenden Faser (1) nach einem der Ansprüche 1 bis 5,
**dadurch gekennzeichnet,**
**daß** die Klebeeinrichtung (20,21) Klebestreifen (20) umfaßt, von denen abgetrennte Enden der mindestens einen Faser (1) leicht entfernbar sind.

7. Vorrichtung zum Trennen von mindestens einer lichtleitenden Faser (1) nach Anspruch 6,
**dadurch gekennzeichnet,**
**daß** die Klebestreifen (20) auswechselbar auf der Wippe (21) befestigt sind.

8. Vorrichtung zum Trennen von mindestens einer lichtleitenden Faser (1) nach einem der Ansprüche 1 bis 7,
**dadurch gekennzeichnet,**
**daß** die Vorrichtung zum Trennen von mehreren parallel angeordneten Fasern (1) ausgebildet ist.

## Claims

1. Device for severing at least one optical fibre (1), with a first (25) and a second (26) fixing element for fixing the at least one fibre (1) in two positions, separated from each other in the axial direction of the fibre (1), with a severing device (3), which is arranged between the two fixing elements (25, 26), and with a bonding device (20, 21), which is arranged in the axial direction of the fibre on the side of one of the fixing elements (26) opposite the severing device (3) for the detachable adhesive bonding-on of the at least one fibre (1), **characterized in that** the bonding device (20, 21) is mounted such that it can pivot altogether about an axis (27) parallel to the fibre axis between a severing position and an inserting position, the bonding device (20, 21) being in adhesive connection with the at least one fibre (1) in the severing position.

2. Device for severing at least one optical fibre (1) according to Claim 1, **characterized in that** the bonding device (20, 21) comprises a rocker (21), **in that** an actuating member (4) for actuating the fixing elements (25, 26) and the severing device (3) is provided for the severing operation after the insertion of the at least one fibre (1) and **in that** the actuating member (4) and the rocker (21) are designed such that the actuating member (4) additionally moves the rocker (21) from the inserting position into the severing position during the severing operation.

3. Device for severing at least one optical fibre (1) according to Claim 2, **characterized in that** the actuating member (4) has a first threaded pin (22) for setting the severing position of the rocker (21).

4. Device for severing at least one optical fibre (1) according to either of Claims 2 and 3, **characterized in that** a second threaded pin (24) is provided for setting the inserting position of the rocker (21).

5. Device for severing at least one optical fibre (1) according to one of Claims 2, 3 or 4, **characterized in that** a compression spring (23) is arranged on the rocker (21) in such a way that the rocker (21) is moved from the severing position into the inserting position after the severing operation.

6. Device for severing at least one optical fibre (1) according to one of Claims 1 to 5, **characterized in that** the bonding device (20, 21) comprises adhesive strips (20), from which severed ends of the at least one fibre (1) can be easily removed.

7. Device for severing at least one optical fibre (1) according to Claim 6, **characterized in that** the adhesive strips (20) are exchangeably fastened on the rocker (21).

8. Device for severing at least one optical fibre (1) according to one of Claims 1 to 7, **characterized in that** the device is designed for severing a plurality of fibres (1) arranged in parallel.

## Revendications

1. Dispositif destiné à sectionner au moins une fibre optique (1), comportant un premier (25) et un deuxième (26) élément de fixation destinés à fixer la au moins une fibre (1) en deux positions séparées l'une de l'autre dans le sens axial de la fibre (1),
comportant un dispositif de sectionnement (3), qui est disposé entre les deux éléments de fixation (25, 26)
et un dispositif adhésif (20, 21), qui est destiné à adhérer, d'une façon amovible, à la au moins une fibre (1) et qui est monté, dans le sens axial de la fibre, sur le côté de l'un des éléments de fixation (26) situé en face du dispositif de sectionnement (3)
**caractérisé par le fait**
**que** le dispositif adhésif (20, 21) est monté, dans son ensemble, d'une façon pivotante autour d'un axe (27) parallèle à l'axe de la fibre, entre une position de sectionnement et une position de mise en place, le dispositif adhésif (20, 21) ayant, dans la position de sectionnement, une liaison par adhésion avec la au moins une fibre (1).

2. Dispositif conforme à la revendication 1 destiné à sectionner au moins une fibre optique (1)
**caractérisé par** l e fait
que le dispositif adhésif (20, 21) comporte un levier pivotant (21),
qu'il est prévu un organe de manoeuvre (4) destiné à actionner les éléments de fixation (25, 26) et le dispositif de sectionnement (3) pour le processus de sectionnement après la mise en place de la au moins une fibre (1)
et que l'organe de manoeuvre (4) et le levier pivotant (21) sont conçus de telle sorts que l'organe de manoeuvre (4), lors du processus de sectionnement, entraîne, en outre, le levier pivotant (21) de la position de mise en place vers la position de sectionnement.

3. Dispositif conforme à la revendication 2 destiné à sectionner au moins une fibre optique (1)
**caractérisé par** l e fait
que l'organe de manoeuvre (4) comporte une première tige filetée (22) destinée à régler la position de sectionnement du levier pivotant (21).

4. Dispositif conforme à l'une des revendications 2 ou 3 destiné à sectionner au moins une fibre optique (1)
**caractérisé par le fait**
**qu'**il est prévu une deuxième tige filetée (24) destinée à régler la position de mise en place du levier pivotant (21).

5. Dispositif conforme à l'une des revendications 2, 3 ou 4 destiné à sectionner au moins une fibre optique (1)
**caractérisé par** l e fait
qu'un ressort de pression (23) est monté sur le levier pivotant (21) de telle sorte que le levier pivotant (21) est entraîné, après le processus de sectionnement, de la position de sectionnement vers la position de mise en place.

6. Dispositif conforme à l'une des revendications 1 à 5 destiné à sectionner au moins une fibre optique (1)
**caractérisé par** l e fait
que le dispositif adhésif (20, 21) comporte des bandes adhésives (20), desquelles les extrémités sectionnées de la au moins une fibre (1) peuvent être facilement enlevées.

7. Dispositif conforme à la revendication 6 destiné à sectionner au moins une fibre optique (1)
**caractérisé par le fait**
**que** les bandes adhésives (20) sont fixées d'une façon interchangeable sur le levier basculant (21).

8. Dispositif conforme à l'une des revendications 1 à 7 destiné à sectionner au moins une fibre optique (1)
**caractérisé par le fait**
**que** le dispositif est conçu pour sectionner plusieurs fibres (1) disposées en parallèle.
